# EUROPEAN PATENT SPECIFICATION

(11) **EP 3 561 405 B1**
(45) Date of publication and mention of the grant of the patent: **24.11.2021**
(21) Application number: 18767638.2
(22) Date of filing: 05.03.2018
(51) Int. Cl.: F24F 11/64, F24F 11/61, F24F 11/65, F24F 11/77, F24F 11/79, F24F 11/80

(54) **AIR CONDITIONER CONTROL METHOD**
KLIMAANLAGE-STEUERUNGSVERFAHREN
PROCÉDÉ DE COMMANDE DE CLIMATISEUR

(30) Priority: 17.03.2017 CN 201710160002
(43) Date of publication of application: 30.10.2019
(73) Proprietor: Qingdao Haier Air Conditioner General Corp., Ltd., Qingdao, Shandong 266101 (CN)
(72) Inventor: XIAO, Keqiang, Shandong 266101 (CN); XU, Beibei, Shandong 266101 (CN); GUO, Li, Shandong 266101 (CN); REN, Deliang, Shandong 266101 (CN); LIU, Juke, Shandong 266101 (CN); CHENG, Yongfu, Shandong 266101 (CN)
(74) Representative: Byrne, Declan
(86) International application number: PCT/CN2018/078041
(87) International publication number: WO 2018/166372

(56) References cited:
- CN-A- 102 374 605
- CN-A- 102 563 814
- CN-A- 102 721 159
- CN-A- 103 982 982
- CN-A- 104 864 568
- CN-A- 104 913 440
- CN-A- 105 890 109
- JP-A- 2006 057 908
- JP-A- 2016 042 011
- JP-B2- 5 389 618

## Description

### Field of the invention

The present invention belongs to the field of air conditioning technology, and more particularly to a method of controlling an air conditioner.

### Description of the Related Art

As residential air conditioning popularized and intelligent technology improved, the intelligent control of air conditioner becomes an evitable trend for advancement.

The control of air conditioning depends on multiply control objectives which typically are input from the user. It needs people to set desired environmental parameters in an early stage for instructing the air conditioner how to work. If the environment is changing, the user requires consecutively altering those parameters to obtain a desired result. The modification is comparatively complicated and time-consuming which may damage user experience.

The prior art has addressed this known problem in such a fashion. In general, it is an automatic control method which includes: obtaining a group of indoor temperatures, outdoor temperatures and target parameters at intervals as the air conditioner working; generating an operate mode data based on those parameters which are available for calling at any time. When the air conditioner is powered on, the built-in control logic would read a real-time indoor temperature and a real-time outdoor temperature and select an appropriate operate mode from the operate mode data according to the indoor temperature and the outdoor temperature to control the air conditioner work. Although this arrangement is certainly considered to simplify the operation, it suffers from various drawbacks such that it is merely a full replication of user's setting without considering whether or not the control is proper. Therefore the possibility exists of discomfort would still he entered

CN105890109A discloses an online long-acting performance detection and optimized running method for a room air conditioner, also disclosing the features of the preamble of claim 1. The method includes the steps that firstly, air conditioner running data are measured hour by hour and saved; secondly, the running data are preprocessed, and data in a stable running state are acquired; thirdly, the air supply temperature and the like of the air conditioner in the data serve as input parameters, the power and the like of the air conditioner serve as output parameters, and a long-acting performance prediction model of the air conditioner is established, and the energy efficiency of the air conditioner is calculated; fourthly, the common running work condition of the air conditioner is determined, and performance parameter values under the running work condition are acquired based on the prediction model and serve as evaluation indexes; fifthly, preferentially designed indoor temperature and humidity of a current user are found out; and sixthly, an optimal running control model of the air conditioner under special outdoor temperature and humidity is established, and a control manner of the air conditioner is updated. The online long-acting performance detection and optimized running method for the room air conditioner can detect the performance state of the air conditioner in time; and meanwhile based on the using habit of the current user and the optimized running manner of the performance state of the air conditioner, the running energy efficiency of the air conditioner can be better improved while the using requirement of the user is met.

### Summary of the invention

An object of the present invention is to provide an air conditioner control method which improves the accuracy of air conditioner control and the comfort of use.

### Technical solution

In order to achieve the above object, the present invention concerns a method according to claim 1. Further advantageous features are present in the dependent claims. The present invention is implemented by the following technical solutions:

An air conditioner control method, the method comprising:
obtaining a current ambient temperature when the air conditioner is being powered on, and selecting a current operational parameter corresponding to the current ambient temperature from stored optimal operational parameters which are paired with historical ambient temperatures;
performing a control process on the air conditioner according to the current operational parameter;
wherein a one-to-one correspondence between the historical ambient temperatures and the optimal operational parameters obtained by a process including:
   obtaining a continuous running time since this start, how many times operational parameters being modified since this start and an ambient temperature since this start as receiving a power-off signal; obtaining an allowed modification times of operational parameters during the running duration, which corresponds to the continuous running time since this start, according to a predetermined one-to-one correspondence between allowable modification times and continuous running time;
   if the times of the operational parameters being modified obtained is not greater than the allowed modification times, setting the last modification of the operational parameter as the optimal operational parameter matched with the ambient temperature since this start; pairing the optimal operational parameter with the ambient temperature to generate and store the one-to-one correspondence between the optimal operational parameters and the historical ambient temperatures;
   if the times of the operational parameters being modified obtained is greater than the allowed modification times identified, terminating the setting of the optimal operational parameters.

Selecting a current operational parameter corresponding to the current ambient temperature from stored optimal operational parameters which are paired with historical ambient temperatures may include:
Comparing the current ambient temperature of the air conditioner with each of the historical ambient temperatures;
Rating the closest historical ambient temperature and set the optimal operational parameter corresponding to the closest historical ambient temperature as the current operational parameter.

The control method as described above, the method preferably further comprising:
if there are multiple closest historical ambient temperatures around a current ambient temperature, obtaining the optimal operational parameters corresponding to each of the historical ambient temperatures; determining whether every category of the operational parameters are same corresponding to different historical ambient temperatures; if the category of the operational parameters are same corresponding to different historical ambient temperatures, including the operational parameters of the category in the current operational parameters; if the category of the operational parameters are different corresponding to different historical ambient temperatures, calculating an average of the different operational parameters, including the average of the category in the current operational parameters.

The control method as described above, the method preferably further comprising
if there are multiple closest historical ambient temperatures around a current ambient temperature, selecting the one historical ambient temperature detected in a month or in a season same with current status, and obtaining the optimal operational parameters corresponding to the selected historical ambient temperature and setting as the current operational parameters.

Preferably, if there are multiple historical ambient temperatures detected in a same month or in a same season, then obtaining the optimal operational parameters corresponding to each of the historical ambient temperatures; determining whether every category of the operational parameters are same corresponding to different historical ambient temperatures; if the category of the operational parameters are same corresponding to different historical ambient temperatures, including the operational parameters of the category in the current operational parameters; if the category of the operational parameters are different corresponding to different historical ambient temperatures, calculating an average of the different operational parameters, including the average of the category in the current operational parameters.

The control method as described above, the method may further comprise: If there are multiple closest historical ambient temperatures around a current ambient temperature, selecting the one historical ambient temperature detected with a same placement information with current status and obtaining the optimal operational parameters corresponding to the selected historical ambient temperature and setting as the current operational parameters.

Preferably, if there are multiple historical ambient temperatures detected with the same placement information, then obtaining the optimal operational parameters corresponding to each of the historical ambient temperatures; determining whether every category of the operational parameters are same corresponding to different historical ambient temperatures; if the category of the operational parameters are same corresponding to different historical ambient temperatures, including the operational parameters of the category in the current operational parameters; if the category of the operational parameters are different corresponding to different historical ambient temperatures, calculating an average of the different operational parameters, including the average of the category in the current operational parameters.

In the control method as described above, the placement information may refer to one or more from the factors of geographical location, room layout and installation location.

In the control method as described above, the ambient temperature may include the indoor environment temperature and/or the outdoor environment temperature; the operational parameters may include target temperature, fan speed, angle of air deflector and mode.

Preferably the method as described above further includes:

If it fails to identify the optimal operational parameter from the one-to-one correspondence between the historical ambient temperatures and optimal operational parameters as being powered on, setting a preset default operational parameter as the current operational parameter to control air conditioner.

### Effects of the invention

Compared with the prior art, the advantages and positive effects of the present invention are: in the present invention, as the air conditioner being turned off, the modification times of the operational parameters is being examined; the optimal operational parameters are only allowed to set as the modification times satisfying certain conditions; the ambient temperature since this start and the optimal operational parameters are paired with each other and stored as a one-to-one correspondence between the historical ambient temperature and the optimal operational parameter; as the air conditioner being turned on next time, according to current ambient temperature, an optimal operational parameter could be identified directly based on the predetermined one-to-one correspondence for performing air conditioner control, the complicated setting by the user could be saved to make the air conditioner become more intelligent. Additionally, the optimal operational parameter is only determined as the modification times meet a set condition so it could be regarded as a much more proper operational parameter to make people feel more comfortable; and hence, the control of the air conditioner could be more accurate with a more comfortable effect; and further prevent the wrongly operational parameters get from the user from disturbing the automatic control process.

Advantages and features of the present disclosure and methods for accomplishing the same will be more clearly understood from exemplary embodiments described below with reference to the accompanying drawings.

### BRIEF DESCRIPTION OF THE DRAWINGS

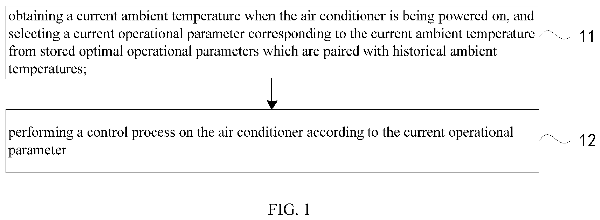

FIG. 1 shows an air conditioner control method according to an embodiment of the present invention.

### Detailed description of the embodiments

The present invention will be further described in detail below with reference to the accompanying drawings and embodiments.

FIG. 1 shows an air conditioner control method according to an embodiment of the present invention.

As shown in FIG. 1, the air conditioner control method includes:
Step 11: Obtaining a current ambient temperature when the air conditioner is being powered on, and selecting a current operational parameter corresponding to the current ambient temperature from stored optimal operational parameters which are paired with historical ambient temperatures.

Wherein the one-to-one correspondence between the historical ambient temperatures and the optimal operational parameters are predetermined; each of the optimal operational parameter could be regarded as a suitable operational parameter at a specific ambient temperature which is matching the habitual action that the user usually does. The one-to-one correspondence between the historical ambient temperatures and the optimal operational parameters is preferably stored in a server, such as in a cloud server. The air conditioner could be connected to the cloud server and transmit the obtained current ambient temperature thereto, the cloud server then responding by delivering the corresponding optimal operational parameter to the air conditioner controller. The one-to-one correspondence between the historical ambient temperatures and the optimal operational parameters could be obtained by procedures includes:
Obtaining parameters including the continuous running time since the start, how many times the operational parameters being modified since the start and the ambient temperature since the start as receiving a power-off signal; wherein the air conditioner could be any one of the air conditioners which are connected to the cloud server and its data could be read and stored in the cloud server; wherein the continuous running time since the start refers to the time duration from receiving a power-on signal to receiving a consecutive power-off signal, which could be measured by a timer built-in the air conditioner; the times that the operational parameters being modified since the start refers to how many times the operational parameters being modified during the time duration from receiving a power-on signal to receiving a consecutive power-off signal, which could be measured by a counter; the operational parameters could be one or more from target temperature, fan speed, angle of air deflector and mode(such as cooling, heating, dehumidification, etc.); the ambient temperature since the start may include the indoor environment temperature measured within where the indoor unit of the air conditioner is disposed in and/or the outdoor environment temperature measured within where the outdoor unit of the air conditioner is disposed in; and preferably, the ambient temperature since the start is an average temperature summarizing a set of indoor temperatures measured in a running time duration. Each time as the power-off signal is being received, the parameters including the continuous running time since the start, how many times the operational parameters being modified since the start and the ambient temperature since the start could be read once.

Then, obtaining an allowed modification times of operational parameters during the running duration, which corresponds to the continuous running time since the start in the previous step, according to a predetermined one-to-one correspondence between a set of numbers of allowable modification times and a set of durations of continuous running time; comparing the times of the operational parameters being modified obtained in previous step with the allowed modification times identified. Wherein the one-to-one correspondence between a set of numbers of allowable modification times and a set of durations of continuous running time are previously stored; as an example, if the a duration of continuous running time satisfying T≤1h, the number of allowed modification times N exactly matched with is 0; if the duration of continuous running time satisfying 1h≤T≤2h, the number of allowed modification times N satisfying N ≤1; if the duration of continuous running time satisfying 2h≤T≤3h, the number of allowable modification times N satisfying N≤2, and so on. In general, the one-to-one correspondence between a set of numbers of allowed modification times and a set of durations of continuous running time satisfies the relation that the longer the duration of continuous running time is, the more modifications are allowed.

If the times of the operational parameters being modified obtained in previous step is less than or equal to the allowed modification times identified, it is determined that the operational parameters since the start is appropriate, and could be considered as optimal; then the last modification of the operational parameter is set as the optimal operational parameter matched with the ambient temperature since the start; the optimal operational parameter and the ambient temperature are paired with and stored in the one-to-one correspondence between the optimal operational parameters and the historical ambient temperatures. A special instance is that if no operational parameter is being modified since the start, namely the modification time is 0, the current operational parameter as being powered on is regarded as the last modification of the operational parameter.

If the times of the operational parameters being modified obtained in previous step is greater than the allowed modification times identified, that is to say the operational parameters are frequently modified during the running duration, it is determined that the operational parameters since the start is not appropriate, and could be considered as incorrect; then terminating the step for setting the optimal operational parameters and abandoning all of the operational parameters during the running duration and prevent the data from involving in the further data learning or data recommending process.

When the air conditioner is being powered on, the current ambient temperature of the air conditioner is first obtained, and then the current operational parameters of the air conditioner could be determined according to the current ambient temperature and the stored one-to-one correspondence between the historical ambient temperatures and optimal operational parameters. As a preferred embodiment, comparing the current ambient temperature of the air conditioner with each of the historical ambient temperatures to rate the closest historical ambient temperature and set the optimal operational parameter corresponding to the closest historical ambient temperature as the current operational parameter.

Step 12: Enabling the air conditioner to run according to the current operational parameter.

In this way the air conditioner could be controlled to run at the current operational parameters determined in Step 11, and the complicated setting as the air conditioner being powered on could be saved, thereby greatly improving the intelligence of air conditioner.

In some other embodiments a preset default operational parameter could be set as the current operational parameter to control air conditioner if it fails to identify the optimal operational parameter from the one-to-one correspondence between the historical ambient temperatures and optimal operational parameters as being powered on.

According to the air conditioner control method disclosed in the present embodiment, the one-to-one correspondence between historical ambient temperatures and optimal operational parameters is generated through the screening process as described in Step 11, in which the optimal operational parameter is only determined as the modification times meet a set condition so it could be regarded as a much more proper operational parameter to make people feel more comfortable; and hence, the control of the air conditioner could be more accurate with a more comfortable effect; and further prevent the wrongly operational parameters get from the user from disturbing the automatic control process.

In other embodiments, if there are multiple closest historical ambient temperatures around a current ambient temperature, several procedures could be employed.
1. if there are multiple closest historical ambient temperatures around a current ambient temperature, obtaining the optimal operational parameters corresponding to each of the historical ambient temperatures; determining whether every category of the operational parameters are same corresponding to different historical ambient temperatures; if the category of the operational parameters are same corresponding to different historical ambient temperatures, including the operational parameters of the category in the current operational parameters; if the category of the operational parameters are different corresponding to different historical ambient temperatures, calculating an average of the different operational parameters, including the average of the category in the current operational parameters. For example, under the condition that there are three closest historical ambient temperatures around a current ambient temperature and the optimal operational parameters corresponding to each of the historical ambient temperatures includes three categories: target temperature, fan speed and mode, in which the target temperatures are completely different but the fan speeds and modes are same. According to the procedures mentioned above, the current operational parameters include the average of the three target temperatures, which is set as the current target temperature, the same fan speed and the same mode; which are set as the current fan speed and current operating mode.
2. if there are multiple closest historical ambient temperatures around a current ambient temperature, selecting the one historical ambient temperature detected in a month or in a season same with current status and obtaining the optimal operational parameters corresponding to the selected historical ambient temperature, which is set as the current operational parameters. Hence, as obtaining the historical ambient temperature, it is preferable to store the recording time in the meanwhile, such as the month and the season. Similarly, as the air conditioner being powered on next time, the current month or season data would be read as well. The optimal operational parameters corresponding to an ambient temperature detected in a same month or season could ensure a more accurate control on air conditioner, thereby making the user feel more comfortable.
   Further, if there are multiple historical ambient temperatures detected in a same month or in a same season, then obtaining the optimal operational parameters corresponding to each of the historical ambient temperatures; determining whether every category of the operational parameters are same corresponding to different historical ambient temperatures; if the category of the operational parameters are same corresponding to different historical ambient temperatures, including the operational parameters of the category in the current operational parameters; if the category of the operational parameters are different corresponding to different historical ambient temperatures, calculating an average of the different operational parameters, including the average of the category in the current operational parameters.
3. if there are multiple closest historical ambient temperatures around a current ambient temperature, selecting the one historical ambient temperature detected with a same placement information with current status and obtaining the optimal operational parameters corresponding to the selected historical ambient temperature, which is set as the current operational parameters. The placement information refers to one or more from the factors of geographical location, room layout (one room, two rooms or three rooms, etc.) and installation location (within a living room, within a warm room or within a cold room) .Hence, as obtaining the historical ambient temperature, it is preferable to store the recording placement information in the meanwhile. Similarly, as the air conditioner being powered on next time, the current placement information would be read as well. The optimal operational parameters corresponding to an ambient temperature detected with the same placement information could ensure a more accurate control on air conditioner, thereby making the user feel more comfortable.

Further, if there are multiple historical ambient temperatures detected with the same placement information, then obtaining the optimal operational parameters corresponding to each of the historical ambient temperatures; determining whether every category of the operational parameters are same corresponding to different historical ambient temperatures; if the category of the operational parameters are same corresponding to different historical ambient temperatures, including the operational parameters of the category in the current operational parameters; if the category of the operational parameters are different corresponding to different historical ambient temperatures, calculating an average of the different operational parameters, including the average of the category in the current operational parameters.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. An air conditioner control method that includes:
obtaining a current ambient temperature at start, when the air conditioner is being powered on, and selecting a current operational parameter corresponding to the current ambient temperature from a plurality of stored optimal operational parameters which are paired with historical ambient temperatures;
performing a control process on the air conditioner according to the current operational parameter;
**characterized in that** a one-to-one correspondence between the historical ambient temperatures and the optimal operational parameters is obtained by a process including:
obtaining a continuous running time since this start, a number of how many times operational parameters being modified since this start and an ambient temperature since this start, each time a power-off signal is being received;
obtaining an allowed modification times of operational parameters of the running duration, corresponding to the continuous running time since this start, from a predetermined one-to-one correspondence between a group of allowable modification times and a group of continuous running duration; if the number of how many times the operational parameters being modified since this start obtained is not greater than the allowed modification times, setting the last modification of the operational parameter as the optimal operational parameter matched with the ambient temperature obtained as the conditioner is being powered on; pairing the optimal operational parameter with the ambient temperature to generate and store the one-to-one correspondence between the optimal operational parameters and the historical ambient temperatures;
if the number of how many times the operational parameters being modified obtained is greater than the allowed modification times, terminating the setting of the optimal operational parameters.

2. The air conditioner control method according to claim 1, **characterized in that** includes
selecting a current operational parameter corresponding to the current ambient temperature from stored optimal operational parameters which are paired with historical ambient temperatures includes:
comparing the current ambient temperature of the air conditioner with each of the historical ambient temperatures to rate the closest historical ambient temperature and set the optimal operational parameter corresponding to the closest historical ambient temperature as the current operational parameter.

3. The air conditioner control method according to claim 2, **characterized in that** includes
if there are multiple closest historical ambient temperatures around a current ambient temperature, obtaining the optimal operational parameters corresponding to each of the historical ambient temperatures; determining whether operational parameters in every category of optimal operational parameters are identical with corresponding to different historical ambient temperatures; if the operational parameters in one same category corresponding to different historical ambient temperatures are identical with each other, then incorporating the operational parameters of this category in the current operational parameters; if the operational parameters in one same category corresponding to different historical ambient temperatures are various, calculating an average of the different operational parameters, then incorporating the average of this category in the current operational parameters.

4. The air conditioner control method according to claim 2, **characterized in that** includes:
if there are multiple closest historical ambient temperatures around a current ambient temperature, selecting the one historical ambient temperature detected in a month or in a season same with current running status, and obtaining the optimal operational parameters corresponding to the selected historical ambient temperature and setting as the current operational parameters.

5. The air conditioner control method according to claim 4, **characterized in that** includes:
if there are multiple historical ambient temperatures detected in a same month or in a same season, obtaining the optimal operational parameters corresponding to each of the historical ambient temperatures; determining whether operational parameters in every category of optimal operational parameters are identical with corresponding to different historical ambient temperatures; if the operational parameters in one same category corresponding to different historical ambient temperatures are identical with each other, then incorporating the operational parameters of this category in the current operational parameters; if the operational parameters in one same category corresponding to different historical ambient temperatures are various, calculating an average of the different operational parameters, then incorporating the average of this category in the current operational parameters.

6. The air conditioner control method according to claim 2, **characterized in that** includes:
if there are multiple closest historical ambient temperatures around a current ambient temperature, selecting the one historical ambient temperature detected with a same placement information with current status, and obtaining the optimal operational parameters corresponding to the selected historical ambient temperature and setting as the current operational parameters.

7. The air conditioner control method according to claim 6, **characterized in that** includes:
if there are multiple historical ambient temperatures detected with a same placement information, obtaining the optimal operational parameters corresponding to each of the historical ambient temperatures; determining whether operational parameters in every category of optimal operational parameters are identical with corresponding to different historical ambient temperatures; if the operational parameters in one same category corresponding to different historical ambient temperatures are identical with each other, then incorporating the operational parameters of this category in the current operational parameters; if the operational parameters in one same category corresponding to different historical ambient temperatures are various, calculating an average of the different operational parameters, then incorporating the average of this category in the current operational parameters.

8. The air conditioner control method according to claim 6, **characterized in that** the placement information refers to one or more from the factors of geographical location, room layout and installation location.

9. The air conditioner control method according to any one of claim 1 to 8, **characterized in that** the ambient temperature includes the indoor environment temperature and/or the outdoor environment temperature; the operational parameters include target temperature, fan speed, angle of air deflector and mode.

10. The air conditioner control method according to any one of claim 1 to 8, **characterized in that** if it fails to identify the optimal operational parameter from the one-to-one correspondence between the historical ambient temperatures and optimal operational parameters as the conditioner is being powered on, setting a preset default operational parameter as the current operational parameter to control the air conditioner.

## Patentansprüche

1. Steuerungsverfahren für eine Klimaanlage, das umfasst:
Erhalten einer aktuellen Umgebungstemperatur bei Start, wenn die Klimaanlage eingeschaltet wird, und Auswählen eines aktuellen Betriebsparameters, welcher der aktuellen Umgebungstemperatur entspricht, aus einer Mehrzahl von gespeicherten optimalen Betriebsparametern, die mit historischen Umgebungstemperaturen gepaart sind;
Durchführen eines Steuerprozesses an der Klimaanlage gemäß dem aktuellen Betriebsparameter;
**dadurch gekennzeichnet, dass** eine Eins-zu-Eins-Entsprechung zwischen den historischen Umgebungstemperaturen und den optimalen Betriebsparametern durch einen Prozess erhalten wird, der umfasst:
Erhalten einer kontinuierlichen Laufzeit seit diesem Start, einer Anzahl von Malen, die Betriebsparameter seit diesem Start modifiziert wurde, und einer Umgebungstemperatur seit diesem Start jedes Mal, wenn ein Abschaltsignal empfangen wird;
Erhalten von zulässigen Modifikationsmalen von Betriebsparametern der Laufdauer, die der kontinuierlichen Laufzeit seit diesem Start entspricht, aus einer vorbestimmten Eins-zu-Eins-Entsprechung zwischen einer Gruppe von zulässigen Modifikationsmalen und einer Gruppe von kontinuierlicher Laufdauer;
Festlegen der letzten Modifikation des Betriebsparameters als den optimalen Betriebsparameter, der mit der Umgebungstemperatur übereinstimmt, die bei Einschalten der Klimaanlage erhalten wird, wenn die erhaltene Anzahl der Male, welche die Betriebsparameter seit diesem Start modifiziert wurde, nicht größer als die zulässigen Modifikationsmale ist;
Paaren des optimalen Betriebsparameters mit der Umgebungstemperatur, um die Eins-zu-Eins-Entsprechung zwischen den optimalen Betriebsparametern und den historischen Umgebungstemperaturen zu erzeugen und zu speichern;
Beenden des Festlegens der optimalen Betriebsparameter, wenn die erhaltene Anzahl der Male, welche die Betriebsparameter modifiziert wurde, größer als die zulässigen Modifikationsmale des Betriebsparameters ist.

2. Steuerungsverfahren für eine Klimaanlage nach Anspruch 1, **dadurch gekennzeichnet, dass** es umfasst, dass:
das Auswählen eines aktuellen Betriebsparameters, welcher der aktuellen Temperatur entspricht, aus gespeicherten optimalen Betriebsparametern, die mit historischen Umgebungstemperaturen gepaart sind, umfasst:
Vergleichen der aktuellen Umgebungstemperatur der Klimaanlage mit jeder der historischen Umgebungstemperaturen, um die am ehesten übereinstimmende historische Umgebungstemperatur zu bewerten, und Festlegen des optimalen Betriebsparameter, welcher der am ehesten übereinstimmenden historischen Umgebungstemperatur entspricht, als den aktuellen Betriebsparameter.

3. Steuerungsverfahren für eine Klimaanlage nach Anspruch 2, **dadurch gekennzeichnet, dass** es umfasst:
Erhalten, wenn es mehrere am ehesten übereinstimmende historische Umgebungstemperaturen um eine aktuelle Umgebungstemperatur gibt, der optimalen Betriebsparameter, die jeder der historischen Umgebungstemperaturen entsprechen; Bestimmen, ob Betriebsparameter in jeder Kategorie von optimalen Betriebsparametern mit entsprechend mit verschiedenen historischen Umgebungstemperaturen identisch sind;
Einbeziehen dann, wenn die Betriebsparameter in einer gleichen Kategorie, die verschiedenen historischen Umgebungstemperaturen entsprechen, miteinander identisch sind, der Betriebsparameter dieser Kategorie in die aktuellen Betriebsparameter;
Berechnen eines Mittelwerts der verschiedenen Betriebsparameter, wenn die Betriebsparameter in einer gleichen Kategorie, die verschiedenen historischen Umgebungstemperaturen entsprechen, verschieden sind, und anschließendes Einbeziehen des Mittelwerts dieser Kategorie in die aktuellen Betriebsparameter.

4. Steuerungsverfahren für eine Klimaanlage nach Anspruch 2, **dadurch gekennzeichnet, dass** es umfasst:
Auswählen, wenn es mehrere am ehesten übereinstimmende historische Umgebungstemperaturen um eine aktuelle Umgebungstemperatur gibt, der einen historischen Umgebungstemperatur, die in einem gleichen Monat oder in einer gleichen Saison mit dem aktuellen Laufstatus erfasst wurde, und Erhalten der optimalen Betriebsparameter, die der ausgewählten historischen Umgebungstemperatur entsprechen, und Festlegen als die aktuellen Betriebsparameter.

5. Steuerungsverfahren für eine Klimaanlage nach Anspruch 4, **dadurch gekennzeichnet, dass** es umfasst:
Erhalten, wenn es mehrere historische Umgebungstemperaturen gibt, die in einem gleichen Monat oder in einer gleichen Saison erfasst wurden, der optimalen Betriebsparameter, die jeder der historischen Umgebungstemperaturen entsprechen; Bestimmen, ob Betriebsparameter in jeder Kategorie von optimalen Betriebsparametern mit entsprechend mit verschiedenen historischen Umgebungstemperaturen identisch sind;
Einbeziehen dann, wenn die Betriebsparameter in einer gleichen Kategorie, die verschiedenen historischen Umgebungstemperaturen entsprechen, miteinander identisch sind, der Betriebsparameter dieser Kategorie in die aktuellen Betriebsparameter;
Berechnen eines Mittelwerts der verschiedenen Betriebsparameter, wenn die Betriebsparameter in einer gleichen Kategorie, die verschiedenen historischen Umgebungstemperaturen entsprechen, verschieden sind, und anschließendes Einbeziehen des Mittelwerts dieser Kategorie in die aktuellen Betriebsparameter.

6. Steuerungsverfahren für eine Klimaanlage nach Anspruch 2, **dadurch gekennzeichnet, dass** es umfasst:
Auswählen, wenn es mehrere am ehesten übereinstimmende historische Umgebungstemperaturen um eine aktuelle Umgebungstemperatur gibt, der einen historischen Umgebungstemperatur, die mit einer gleichen Platzierungsinformation mit dem aktuellen Laufstatus erfasst wurde, und Erhalten der optimalen Betriebsparameter, die der ausgewählten historischen Umgebungstemperatur entsprechen, und Festlegen als die aktuellen Betriebsparameter.

7. Steuerungsverfahren für eine Klimaanlage nach Anspruch 6, **dadurch gekennzeichnet, dass** es umfasst:
Erhalten, wenn es mehrere historische Umgebungstemperaturen gibt, die mit einer gleichen Platzierungsinformation erfasst wurden, der optimalen Betriebsparameter, die jeder der historischen Umgebungstemperaturen entsprechen; Bestimmen, ob Betriebsparameter in jeder Kategorie von optimalen Betriebsparametern mit entsprechend mit verschiedenen historischen Umgebungstemperaturen identisch sind;
Einbeziehen dann, wenn die Betriebsparameter in einer gleichen Kategorie, die verschiedenen historischen Umgebungstemperaturen entsprechen, miteinander identisch sind, der Betriebsparameter dieser Kategorie in die aktuellen Betriebsparameter;
Berechnen eines Mittelwerts der verschiedenen Betriebsparameter, wenn die Betriebsparameter in einer gleichen Kategorie, die verschiedenen historischen Umgebungstemperaturen entsprechen, verschieden sind, und anschließendes Einbeziehen des Mittelwerts dieser Kategorie in die aktuellen Betriebsparameter.

8. Steuerungsverfahren für eine Klimaanlage nach Anspruch 6, **dadurch gekennzeichnet, dass** die Platzierungsinformation sich auf einen oder mehrere aus den Faktoren von geografischem Standort, Raumaufteilung und Aufstellungsort bezieht.

9. Steuerungsverfahren für eine Klimaanlage nach einem der Ansprüche 1 bis 8, **dadurch gekennzeichnet, dass** die Umgebungstemperatur die Temperatur der inneren Umgebung und/oder die Temperatur der äußeren Umgebung umfasst; und die Betriebsparameter Zieltemperatur, Lüftergeschwindigkeit, Luftleitblechwinkel und Modus umfassen.

10. Steuerungsverfahren für eine Klimaanlage nach einem der Ansprüche 1 bis 8, **dadurch gekennzeichnet, dass**, wenn der optimale Betriebsparameter aus der Eins-zu-Eins-Entsprechung zwischen den historischen Umgebungstemperaturen und optimalen Betriebsparametern bei Einschalten der Klimaanlage nicht identifiziert wird, Festlegen eines voreingestellten Standardbetriebsparameters als der aktuelle Betriebsparameter zum Steuern der Klimaanlage.

## Revendications

1. Procédé de commande de climatiseur qui comporte :
l'obtention d'une température ambiante en cours au départ, quand le climatiseur est mis sous tension, et la sélection d'un paramètre opérationnel en cours correspondant à la température ambiante en cours parmi une pluralité de paramètres opérationnels optimaux stockés qui sont associés à des températures ambiantes historiques ;
**caractérisé en ce qu'**une correspondance biunivoque entre les températures ambiantes historiques et les paramètres opérationnels optimaux est obtenue par un procédé comportant :
l'obtention d'un temps de fonctionnement continu depuis ce départ, d'un nombre de fois que des paramètres opérationnels ont été modifiés depuis ce départ et d'une température ambiante depuis ce départ, chaque fois qu'un signal de mise hors tension est reçu ;
l'obtention d'un nombre de modifications autorisées de paramètres opérationnels de la durée de fonctionnement, correspondant au temps de fonctionnement continu depuis ce départ, à partir d'une correspondance biunivoque prédéterminée entre un groupe de nombres de modifications autorisées et un groupe de durées de fonctionnement continu ;
si le nombre de fois que les paramètres opérationnels ont été modifiés depuis ce départ obtenu n'est pas supérieur au nombre de modifications autorisées, l'établissement de la dernière modification du paramètre opérationnel comme le paramètre opérationnel optimal correspondant à la température ambiante obtenue lorsque le climatiseur est mis sous tension ;
l'association du paramètre opérationnel optimal avec la température ambiante pour générer et stocker la correspondance biunivoque entre les paramètres opérationnels optimaux et les températures ambiantes historiques ;
si le nombre de fois que les paramètres opérationnels ont été modifiés obtenu est supérieur au nombre de modifications autorisées, l'achèvement de l'établissement des paramètres opérationnels optimaux.

2. Procédé de commande de climatiseur selon la revendication 1, **caractérisé en ce qu'**il comporte :
la sélection d'un paramètre opérationnel en cours correspondant à la température ambiante en cours parmi des paramètres opérationnels optimaux stockés qui sont associés à des températures ambiantes historiques comporte :
la comparaison de la température ambiante en cours du climatiseur avec chacune des températures ambiantes historiques pour estimer la température ambiante historique la plus proche et établir le paramètre opérationnel optimal correspondant à la température ambiante historique la plus proche comme le paramètre opérationnel en cours.

3. Procédé de commande de climatiseur selon la revendication 2, **caractérisé en ce qu'**il comporte :
s'il y a de multiples températures ambiantes historiques les plus proches autour d'une température ambiante en cours, l'obtention des paramètres opérationnels optimaux correspondant à chacune des températures ambiantes historiques ; la détermination que des paramètres opérationnels dans chaque catégorie de paramètres opérationnels optimaux sont identiques ou non à correspondant à différentes températures ambiantes historiques ; si les paramètres opérationnels dans une même catégorie correspondant à différentes températures ambiantes historiques sont identiques, alors l'incorporation des paramètres opérationnels de cette catégorie dans les paramètres opérationnels en cours ; si les paramètres opérationnels dans une même catégorie correspondant à différentes températures ambiantes historiques sont différents, le calcul d'une moyenne des différents paramètres opérationnels, puis l'incorporation de la moyenne de cette catégorie dans les paramètres opérationnels en cours.

4. Procédé de commande de climatiseur selon la revendication 2, **caractérisé en ce qu'**il comporte :
s'il y a de multiples températures ambiantes historiques les plus proches autour d'une température ambiante en cours, la sélection de la température ambiante historique détectée dans un mois ou une saison identique à un état de fonctionnement en cours, et l'obtention des paramètres opérationnels optimaux correspondant à la température ambiante historique sélectionnée et leur établissement comme les paramètres opérationnels en cours.

5. Procédé de commande de climatiseur selon la revendication 4, **caractérisé en ce qu'**il comporte :
s'il y a de multiples températures ambiantes historiques détectées dans un même mois ou dans une même saison, l'obtention des paramètres opérationnels optimaux correspondant à chacune des températures ambiantes historiques ; la détermination que des paramètres opérationnels dans chaque catégorie de paramètres opérationnels optimaux sont identiques ou non à correspondant à différentes températures ambiantes historiques ; si les paramètres opérationnels dans une même catégorie correspondant à différentes températures ambiantes historiques sont identiques, alors l'incorporation des paramètres opérationnels de cette catégorie dans les paramètres opérationnels en cours ; si les paramètres opérationnels dans une même catégorie correspondant à différentes températures ambiantes historiques sont différents, le calcul d'une moyenne des différents paramètres opérationnels, puis l'incorporation de la moyenne de cette catégorie dans les paramètres opérationnels en cours.

6. Procédé de commande de climatiseur selon la revendication 2, **caractérisé en ce qu'**il comporte :
s'il y a de multiples températures ambiantes historiques les plus proches autour d'une température ambiante en cours, la sélection de la température ambiante historique détectée avec une même information de positionnement qu'un état en cours, et l'obtention des paramètres opérationnels optimaux correspondant à la température ambiante historique sélectionnée et leur établissement comme les paramètres opérationnels en cours.

7. Procédé de commande de climatiseur selon la revendication 6, **caractérisé en ce qu'**il comporte :
s'il y a de multiples températures ambiantes historiques détectées avec une même information de positionnement, l'obtention des paramètres opérationnels optimaux correspondant à chacune des températures ambiantes historiques ; la détermination que des paramètres opérationnels dans chaque catégorie de paramètres opérationnels optimaux sont identiques ou non à correspondant à différentes températures ambiantes historiques ; si les paramètres opérationnels dans une même catégorie correspondant à différentes températures ambiantes historiques sont identiques, alors l'incorporation des paramètres opérationnels de cette catégorie dans les paramètres opérationnels en cours ; si les paramètres opérationnels dans une même catégorie correspondant à différentes températures ambiantes historiques sont différents, le calcul d'une moyenne des différents paramètres opérationnels, puis l'incorporation de la moyenne de cette catégorie dans les paramètres opérationnels en cours.

8. Procédé de commande de climatiseur selon la revendication 6, **caractérisé en ce que** l'information de positionnement fait référence à un ou plusieurs facteurs parmi l'emplacement géographique, la disposition de la pièce et l'emplacement d'installation.

9. Procédé de commande de climatiseur selon l'une quelconque des revendications 1 à 8, **caractérisé en ce que** la température ambiante inclut la température de l'environnement intérieur et/ou la température de l'environnement extérieur ; les paramètres opérationnels comportent une température cible, une vitesse de ventilateur, un angle de déflecteur d'air et un mode.

10. Procédé de commande de climatiseur selon l'une quelconque des revendications 1 à 8, **caractérisé en ce que**, en cas d'échec à identifier le paramètre opérationnel optimal à partir de la correspondance biunivoque entre les températures ambiantes historiques et les paramètres opérationnels optimaux lorsque le climatiseur est mis sous tension, l'établissement d'un paramètre opérationnel par défaut préréglé comme le paramètre opérationnel en cours pour commander le climatiseur.
